# EUROPEAN PATENT SPECIFICATION

(11) **EP 1 562 678 B1**
(45) Date of publication and mention of the grant of the patent: **19.04.2006**
(21) Application number: 03811405.4
(22) Date of filing: 23.06.2003
(51) Int. Cl.: A62B 17/00, A62C 2/06, A62C 8/06

(54) **FIRE BARRIERS AND THEIR METHOD OF MANUFACTURE**
BRANDSCHUTZABSCHIRMUNGEN UND IHR HERSTELLUNGSVERFAHREN
BARRIERES COUPE-FEU ET LEURS PROCEDES DE FABRICATION

(30) Priority: 19.11.2002 GB 0226903
(43) Date of publication of application: 17.08.2005
(73) Proprietor: ENVIRONMENTAL SEALS LIMITED, Nr. Dover, Kent CT15 7JG (GB)
(72) Inventor: Ward, Derek Alfred, Dover, Kent CT15 5HR (GB)
(74) Representative: Fry, Alan Valentine
(86) International application number: PCT/GB2003/002680
(87) International publication number: WO 2004/045721

(56) References cited:
- WO-A-94/20055
- GB-A- 2 303 788
- US-A- 4 994 317

## Description

This invention relates to fire barriers and methods of producing the same. More especially, but not exclusively, the invention concerns fire barriers or curtains in heat insulated sheet form for providing fireproofing to structural members such as floors, roofs and walls.

Presently available fire barriers for use in, for example, loft areas of buildings are conventionally produced in the form of glass fibre sheets which are not only bulky and heavy to install but cannot be used in sterile areas used, for example, to store an operate computers. Other available fire barriers include those constructed from timber and plasterboard, block or brickwork. Such barriers have limited application, are difficult to construct and add to the weight imposed by the building significantly.

Our UK Patent 2250933B is directed to a fire barrier which comprises a sheet of woven glass fibrous cloth coated on one side only with an intumescent material and on its other side with a layer of metallic foil. In practice, where the fire barrier disclosed in this earlier patent is effective in delaying the onset of flame penetration, it has been found to have certain limitations *vis-à-vis* heat insulation.

In one arrangement, the invention relates to heat insulated fireproofed barriers or curtains which are impregnated or coated with a quantity of intumescent material and which have sufficient flexibility to enable them to overlie an area to be protected or to be applied directly to the surface of a structure such as timber trusses, ceilings or walls to provide for that structure fire and heat resistance. In another arrangement, the sheets may be employed as a wrap to insulate pipes, cabling and the like.

One object of the present invention is to provide a fireproofed barrier or curtain having enhanced heat insulation and fire-resistance which prevents the passage of smoke and flame and insulates the cold face of the barrier or curtain from rapid increases in temperature in the event of fire.

In one aspect, the invention provides an insulated fireproofed barrier or curtain which comprises a first fabric sheet impregnated or coated with a quantity of intumescent material, a first sheet of foil having a reflective and relatively non-reflective surface positioned with its reflective surface in contact with one side of the first fabric sheet, a non-inflammable fibrous heat insulation layer contacted on one side by the non-reflective surface of the first foil sheet, a second foil sheet having a reflective and a relatively non-reflective surface positioned with its non-reflective surface in contact with the fibrous heat insulation layer and a second fabric sheet impregnated or coated with a quantity of intumescent material positioned with its innermost surface in contact with the reflective surface of the second foil sheet, the two fabric sheets defining the outer coverings of the barrier.

The fabric sheets preferably comprise sheets of woven glass fibre cloth coated on one or both sides with a solution containing an intumescent material.

The fibrous sheets are preferably quilts of fibrous fireproofed material. The thickness of these sheets is typically between 10 and 20mm; preferably 15mm.

The fabric sheets, foil sheets and fibrous sheets may be secured together by any conventional means, including adhesive, stitching or stapling. In an alternative arrangement, only some or all of the borders of the fabric sheets are secured together. These may again be secured by any conventional means, including adhesive, stitching or stapling.

Each foil sheet may include a mesh of filaments comprising, for example, strands or threads of nylon or glass fibres. Typically, the foil sheets comprise craft paper.

The barrier may include an additional layer of fibrous insulation material, this being separated from the other such layer by a third foil sheet both of whose outer surfaces are reflective. This third foil sheet may comprise two individual foil sheets located back-to-back.

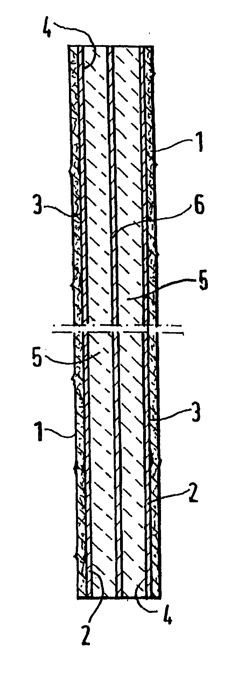

The invention will now be described, by way of example only, with reference to the accompanying diagrammatic drawing in which the sole Figure schematically illustrates in end view a fireproofed barrier or curtain in accordance with the invention to an enlarged scale.

The exposed sides of the barrier comprise sheets of woven glass fibre cloth 1 each impregnated or coated on one or both sides with a solution containing an intumescent material. This intumescent material expands in the presence of heat or fire to provide additional integrity. Positioned behind and in contact with each fabric sheet 1 are sheets 2 of craft paper comprising metallic foil having reflective surfaces 3 and relatively non-reflective surfaces 4. As will be seen from the drawing, the foil sheets 2 are positioned with their reflective surfaces in contact with the adjoining surface of the respective fabric sheet 1.

Fibrous quilt sheets 5 of fibrous fireproofed heat insulation material are positioned in contact with the non-reflective surfaces 4 of the foil sheets 2. The thickness of the quilt sheets 5 is selected to provide good, heat insulation qualities for the barrier. Typically, the sheet thickness is between 10 and 20mm, preferably 15mm. Positioned between the two quilt sheets of heat insulation material 5 is a sheet of foil 6 both of whose opposite sides are reflective. In a preferred arrangement, sheet 6 comprises two back-to-back foil sheets with their non-reflective surfaces in contact with one another.

The fabric, foil and heat insulation sheets and layers are either adhered, stitched or stapled together. Other means of attaching the sheets may be employed. In one arrangement, only the margins of the fabric sheets are secured together, these acting as an envelope for the other sheets and layers.

In use, the reflective surfaces 3 of the foil sheets act to inhibit the passage of heat from one side of the barrier to the other. Thus, no matter which side of the barrier is exposed to excessive heat, the other side remains relatively cool. The intumescent content of the fabric sheet 1 provides enhanced protection against the passage of fire and smoke.

Barriers or curtains in accordance with the invention provide in excess of 60 minutes integrity in the event of fire and periods in excess of 30 minutes heat insulation.

Barriers or curtains in accordance with the invention have particular application in roof voids and above suspended ceilings. Additionally, they have application as fireproofed heat insulated wraps for pipes, cabling and the like, and as liners for wall and ceiling openings.

It will be appreciated that the foregoing is merely exemplary of fire barriers in accordance with the invention and that modifications can readily be made thereto without departing from the true scope of the claims.

## Claims

1. An insulated fireproofed barrier or curtain which comprises a first fabric sheet impregnated or coated with a quantity of intumescent material, a first sheet of foil having a reflective and relatively non-reflective surface positioned with its reflective surface in contact with one side of the first fabric sheet, a non-inflammable fibrous heat insulation layer contacted on one side by the non-reflective surface of the first foil sheet, a second foil sheet having a reflective and a relatively non-reflective surface positioned with its non-reflective surface in contact with the fibrous heat insulation layer and a second fabric sheet impregnated or coated with a quantity of intumescent material positioned with its innermost surface in contact with the reflective surface of the second foil sheet, the two fabric sheets defining the outer coverings of the barrier or curtain.

2. A fireproofed barrier or curtain as claimed in claim 1 wherein the fabric sheets comprise sheets of woven glass fibre cloth coated on one or both sides with a solution containing an intumescent material.

3. A fireproofed barrier or curtain as claimed in claim 1 or 2 wherein the fibrous sheets comprise a quilt of fibrous fireproofed material.

4. A fireproofed barrier or curtain as claimed in any one of the preceding claims wherein the thickness of the fibrous sheets is between 10 and 20mm.

5. A fireproofed barrier or curtain as claimed in any one of the preceding claims wherein the fabric sheets, foil sheets and fibrous sheet are secured together along one or all of their borders by adhesive, stitching or stapling.

6. A fireproofed barrier or curtain as claimed in any one of the preceding claims wherein each foil sheet includes a mesh of filaments of nylon or glass fibres.

7. A fireproofed barrier or curtain as claimed in any one of the preceding claims wherein the barrier includes an additional layer of fibrous insulation material, this being separated from the other such layer by a third foil sheet both of whose outer surfaces are reflective.

8. A fireproofed barrier or curtain as claimed in claim 7 wherein the third foil sheet comprises two individual foil sheets located back-to-back.

## Patentansprüche

1. Wärmeisolierte Brandschutzabschirmung oder Schutzvorhang mit einer ersten Stoffbahn, die mit einer bestimmten Menge eines intumeszenten Materials imprägniert oder überzogen ist, mit einer ersten Folienbahn mit einer reflektierenden und einer relativ nicht-reflektierenden Oberfläche, die mit ihrer reflektierenden Oberfläche in Berührung mit einer Seite der ersten Stoffbahn steht, mit einer nichtentflammbaren Faserstoff-Wärmeisolationsschicht, die auf einer Seite durch die nicht-reflektierende Oberfläche der ersten Folienbahn in Berührung steht, mit einer zweiten Folienbahn, die eine reflektierende und eine relativ nicht-reflektierende Oberfläche aufweist und mit ihrer nicht-reflektierenden Oberfläche in Berührung mit der Faserstoff-Wärmeisolationsschicht steht und mit einer zweiten Stoffbahn, die mit einer bestimmten Menge des intumeszenten Materials imprägniert oder überzogen ist und mit ihrer innersten Oberfläche in Berührung mit der reflektierenden Oberfläche der zweiten Folienbahn steht, wobei die beiden Stoffbahnen die äußeren Abdeckungen der Brandschutzabschirmung oder des Schutzvorhangs definieren.

2. Brandschutzabschirmung oder Schutzvorhang nach Anspruch 1, wobei die Stoffbahnen aus gewebtem Glasfasermaterial bestehen, das auf einer oder beiden Seiten mit einer Lösung überzogen ist, die ein intumeszentes Material enthält.

3. Brandschutzabschirmung oder Schutzvorhang nach den Ansprüchen 1 oder 2, wobei die Faserstoffbahnen aus einem gesteppten, feuerfesten Faserstoffmaterial bestehen.

4. Brandschutzabschirmung oder Schutzvorhang nach einem der vorhergehenden Ansprüche, wobei die Faserstoffbahnen zwischen 10 und 20 mm dick sind.

5. Brandschutzabschirmung oder Schutzvorhang nach einem der vorhergehenden Ansprüche, wobei die Stoffbahnen, die Folienbahnen und die Faserstoffbahnen längs eines ihrer Ränder oder längs aller Ränder durch Verklebung, durch Nähte oder durch Heftung miteinander verbunden sind.

6. Brandschutzabschirmung oder Schutzvorhang nach einem der vorhergehenden Ansprüche, wobei jede Folienbahn ein Maschennetzwerk aus Nylonfasern oder Glasfasern aufweist.

7. Brandschutzabschirmung oder Schutzvorhang nach einem der vorhergehenden Ansprüche, wobei die Abschirmung eine zusätzliche Bahn aus Faserstoff-Isolationsmaterial umfasst, die von den anderen Bahnen durch eine dritte Folienbahn getrennt ist, dessen beide äußeren Oberflächen reflektierend sind.

8. Brandschutzabschirmung oder Schutzvorhang nach Anspruch 7, wobei die dritte Folienbahn zwei individuelle Folienblätter aufweist, die mit ihren Rückseiten aneinander angeordnet sind.

## Revendications

1. Une barrière ou rideau coupe-feu isolé qui comprend une première feuille en tissu imprégnée ou enduite d'une quantité de matière intumescente, une première feuille en film ayant une surface réfléchissante et relativement non-réfléchissante positionnée avec sa surface réfléchissante en contact avec un côté de la première feuille de tissu, une couche d'isolant thermique fibreux ininflammable en contact d'un côté avec la surface non-réfléchissante de la première feuille en film, une seconde feuille en film ayant une surface réfléchissante et une surface relativement non-réfléchissante positionnée avec sa surface non-réfléchissante en contact avec une couche d'isolant thermique fibreux et une seconde feuille de tissu imprégnée ou enduite avec une quantité de matière intumescente positionnée avec sa surface la plus interne en contact avec la surface réfléchissante de la seconde feuille en film, et deux feuilles de tissu définissant les revêtements externes de la barrière ou rideau.

2. Une barrière ou rideau coupe-feu selon la revendication 1 dans laquelle les feuilles de tissu comprennent des feuilles de tissu de fibres de verre tissées enduites d'un ou des deux côtés d'une solution contenant une matière intumescente.

3. Une barrière ou rideau coupe-feu tel que revendiqué dans la revendication 1 ou 2 dans laquelle les feuilles fibreuses comprennent un matelas de matière coupe-feu fibreuse.

4. Une barrière ou rideau coupe-feu tel que revendiqué dans l'une quelconque des revendications précédentes dans laquelle l'épaisseur des feuilles fibreuses se situent entre 10 et 20 mm.

5. Une barrière ou rideau coupe-feu tel que revendiqué dans l'une quelconque des revendications précédentes dans laquelle les feuilles de tissu, les feuilles en film et la feuille fibreuse sont liées ensemble le long d'un ou de la totalité de leurs bords par un adhésif, une couture ou des agrafes.

6. Une barrière ou rideau coupe-feu tel que revendiqué dans l'une quelconque des revendications précédentes dans laquelle chaque feuille en film comprend un maillage de filaments de nylon ou de fibres de verre.

7. Une barrière ou rideau coupe-feu tel que revendiqué dans l'une quelconque des revendications précédentes dans laquelle la barrière comporte une couche supplémentaire de matière isolante fibreuse, celle-ci étant séparée de l'autre de ces couches par une troisième feuille en film dont les deux surfaces externes sont réfléchissantes.

8. Une barrière ou rideau coupe-feu tel que revendiqué dans la revendication 7 dans laquelle 1a troisième feuille en film comprend deux feuilles en film individuelles disposées dos à dos.
